# EUROPEAN PATENT SPECIFICATION

(11) **EP 2 791 390 B1**
(45) Date of publication and mention of the grant of the patent: **25.11.2015**
(21) Application number: 12791816.7
(22) Date of filing: 30.11.2012
(51) Int. Cl.: C23C 24/06, F16C 33/64, C04B 41/45, C23C 26/00

(54) **A PROCESS FOR PREPARING A PROTECTIVE LAYER ON A TRIBOLOGICAL SURFACE OF A MECHANICAL COMPONENT**
VERFAHREN ZUR HERSTELLUNG EINER SCHUTZSCHICHT AUF EINER TRIBOLOGISCHEN OBERFLÄCHE EINES MECHANISCHEN BAUTEILS
PROCÉDÉ PERMETTANT DE PRÉPARER UNE COUCHE DE PROTECTION SUR UNE SURFACE TRIBOLOGIQUE D'UN COMPOSANT MÉCANIQUE

(30) Priority: 13.12.2011 WO PCT/EP2011/072663
(43) Date of publication of application: 22.10.2014
(73) Proprietor: Aktiebolaget SKF, 415 50 Göteborg (SE)
(72) Inventor: NOORDMAN, Maarten, NL-4117 Erichem (NL); MULLER, Dries, NL-6531S Nijmegen (NL); MEIJER, Dick, NL-6703 DN Wageningen (NL); SANDEN, VAN DE, John, NL-3435 DT Nieuwegein (NL)
(74) Representative: Tweedlie, Diane Harkness
(86) International application number: PCT/EP2012/074134
(87) International publication number: WO 2013/087429

(56) References cited:
- WO-A2-2009/071674
- US-A1- 2002 106 978
- US-A1- 2002 183 209

## Description

### FIELD OF THE INVENTION

The present invention relates to a process for preparing a protective layer on a tribological surface of a mechanical component. The process is particularly suitable for preparing a protective layer on a tribological surface of a rolling element bearing.

### BACKGROUND

A bearing is a device that permits constrained relative motion between two components. Bearings may be used in many different types of machinery to retain and support rotating components such as, for example, a wheel on a vehicle, a vane on a windmill or a drum in a washing machine. A rolling element bearing comprises inner and outer rings and a plurality of rolling elements (balls or rollers). As the bearing rotates, the raceways of the inner ring and outer ring make contact with the rolling elements. This results in a wear path on both the rolling elements and the raceways. For a variety of reasons it sometimes happens that a bearing does not attain its calculated rating life. Rolling fatigue can, for instance, occur as a result of wear and fretting.

The minimization of wear and fretting is therefore important to extend the fatigue life of bearings. One way of extending the fatigue life of a bearing is to apply lubrication which, by means of an oil film, reduces the friction and wear in the contact areas of the respective bearing components.

It is further known to try to reduce wear by using, for example, a hard coating. However, these hard coatings have tended to be ceramic, which are brittle in nature and therefore subject to cracking and breaking up, thereby forming debris. This debris in turn results in an increase in wear. Therefore, these coatings, instead of alleviating the effects of wear and fretting, can actually increase the wear and fretting under some circumstances.

Currently, the most successful approach to countering the effects of fretting and wear on bearings is to use a lubricating oil, grease or paste which includes one or more additives with anti-wear and/or anti-fretting properties to reduce the friction between bearing components. Over time the additives form a layer that prevents metal-to-metal contact between the rolling elements and the raceway. A disadvantage of these additives is that a chemically active compound is needed, to provide a certain acidity for a chemical reaction. The chemical reaction takes place between the metal matrix and the active compound, which deteriorates the metal matrix. Further disadvantages of such applications are the facts that the layer is not present from the start of the use of the bearing and that formation of the layer only occurs when a particular temperature has been reached.

In JP 3271378 the formation of a protective layer on the surface of a sliding member or rolling member in the dynamic state has been described. The layer is formed by means of a tribochemical reaction in which reaction a chemically active compound such as an organic sulphur compound, organic phosphorus compound or an organic chlorine compound is used. The use of such compounds means that the contact surfaces are chemically attacked which may result in corrosion, fretting and wear problems.

Further, in WO 2009/071674 A2, the curved surface of a low-friction mechanical element is covered with a layer of tungsten disulphide by way of a tribochemical deposition process during which process the tungsten disulphide is formed as a result of the chemical reaction between a tool having a tungsten-carbide surface and a process fluid that contains sulphur.

US 2002/0106978 A1 discloses surface finishing with phosphate and sulfate conversion coatings formed in-situ.

US 2002/0183209 A1 discloses forming a lubricant film by means of a physical deposition of a solid powder.

### SUMMARY OF THE INVENTION

The present invention aims to provide a new approach to combat the effects of wear and fretting between components of a bearing, and which deals with the disadvantages discussed above. In particular, the present invention provides a mechanical component for use in bearing applications, wherein a tribological surface of the mechanical component is provided with a protective layer of a metal phosphate and/or metal sulphate having anti-wear and/or anti-fretting properties, which metal phosphate and/or metal sulphate is physically deposited onto the tribological surface of the mechanical component. Hence, the protective layer is already present before operating the bearing, resulting in an improved fatigue life of the bearing. Moreover, the use of present protective layer also allows the use of lubricating oils in which no anti-wear and anti-fretting additives, or a reduced amount of such additives, are present, making the use of the bearing more cost-effective.

Accordingly, the present invention relates to a process for preparing a protective layer on a tribological surface of a mechanical component, wherein the layer comprises a metal phosphate and/or metal sulphate having anti-wear and/or anti-fretting properties, and the process comprises subjecting the surface of the component to a mechanical treatment which is carried out with a tool that moves at or along the tribological surface during which treatment the metal phosphate and/or metal sulphate is provided in solid form, and the layer is formed on the tribological surface of the mechanical component by means of physical deposition of the metal phosphate and/or metal sulphate.

### DETAILED DESCRIPTION OF THE INVENTION

In accordance with the present invention a metal phosphate and/or metal sulphate is used. Preferably, only a metal phosphate is used. Preferably, the metal to be used in the present invention is selected from the group consisting of calcium, zinc, antimony, lead, bismuth and barium. Most preferably, the metal phosphate comprises calcium phosphate.

The metal phosphate and/or metal sulphate to be used in accordance with the present invention is in solid form, e.g. in powder form or paste form. When the metal phosphate and/or metal sulphate is used in the form of a paste, a small amount of a lubricating oil or a grease can be present. Suitably, the lubricating oil or grease is present in an amount of less than 5 wt.%, preferably less than 2 wt%, and most preferably less than 1 wt%, based on total weight of the paste. As the lubricating oil or grease, any lubricating oil or grease known per se may be used.

Preferably, the metal phosphate and/or metal sulphate in solid form is provided in the form of a powder. Suitably, the metal phosphate and/or metal sulphate may be pressed into a block together with a solid carrier material such as a ceramic material. Preferably, such a block comprises at least 50 wt% of the metal phosphate and/or metal sulphate, more preferably 70-80 wt% of the metal phosphate and/or metal sulphate, based on total weight of the block.

In the process of the present invention the mechanical treatment is carried out at a temperature in the range of from 20 - 150 °C, preferably in the range of from 40 - 120 °C. The mechanical treatment can suitably be carried out for a period of time in the range of from 1 second to 10 minutes, preferably a period of time in the range of from 1 second 2 minutes. The mechanical treatment is suitably carried out at a pressure in the range of from 0.01 - 2 GPa, preferably at a pressure of 0.01 - 1 GPa.

The protective layer to be prepared with the process in accordance with the present invention has suitably a thickness in the range of from 1 nanometer to 2 µm, preferably 1 nanometer to 1 µm.

In accordance with the present invention the protective layer is formed on the tribological surface of the mechanical component by means of physical deposition of the metal phosphate and/or metal sulphate. The present process is therefore a non-chemical deposition process.

In accordance with the present invention a wide variety of mechanical components can be used. Preferably, the mechanical component comprises a bearing component, a gear box component, a shaft or a machine bed. More preferably, the mechanical component comprises a bearing inner or outer ring, whereby the protective layer is provided on the raceway of the bearing ring. Preferably, in accordance with the invention, prior to the mechanical treatment, the mechanical component is subjected to one or more finishing techniques selected from the group consisting of grinding and honing, hard turning, ECM (electro chemical machining), calendaring, burnishing, vibrofinishing and laser treatment.

The mechanical treatment in the process according to the present invention is carried out with a tool that moves at or along the tribological surface. Preferably, the mechanical treatment is carried out by means of a hone-like process. Hence, the tool to be used in the mechanical treatment is suitably a honing tool. The honing tool can be any honing tool known in the art. Suitably, the honing tool may comprise a carrier with a similar geometry to a hone stone. The carrier may be a regular hone stone, whereby the outer surface is provided with a layer of metal phosphate and/or metal sulphate paste. Alternatively, the carrier may be formed from a block of metal phosphate and/or metal sulphate powder that has been pressed together with a ceramic material, as described above. The carrier may be the honing tool or form part of the honing tool.

During the process, the carrier pressed onto, for example, the raceway of a bearing inner ring, while the ring is rotated. Preferably, the raceway of the bearing outer ring is also subjected to the process of the invention, such that when the bearing is assembled, it is able to withstand high loads on start-up, without risk of wear. Thus, in accordance with the present invention, "finished" mechanical components can be produced which are ready for operation and which show excellent anti-wear and/or anti-fretting properties from the very beginning of their use.

## Claims

1. A process for preparing a protective layer on a tribological surface of a mechanical component, wherein the layer comprises a metal phosphate and/or metal sulphate having anti-wear and/or anti-fretting properties, and the process comprises subjecting the surface of the component to a mechanical treatment which is carried out with a tool that moves at or along the tribological surface during which treatment the metal phosphate and/or metal sulphate in solid form is provided and the layer is formed on the surface of the mechanical component by means of physical deposition of the metal phosphate and/or metal sulphate.

2. A process according to claim 2, wherein the metal is selected from the group consisting of calcium, zinc, antimony, lead, bismuth and barium.

3. A process according to claim 1 or 2, wherein the metal phosphate is calcium phosphate.

4. A process according to any one of claims 1-3, wherein the metal phosphate and/or metal sulphate is provided in the form of a powder or a paste.

5. A process according to claim 4, wherein the metal phosphate and/or metal sulphate is provided in the form of a powder.

6. A process according to any one of claims 1-5, wherein the mechanical treatment is carried out at a temperature in the range of from 20 - 150 °C, preferably in the range of from 40 - 120°C.

7. A process according to any one of claims 1-6, wherein the mechanical treatment is carried out for a period of time in the range of from 1 second to 10 minutes, preferably a period of time in the range of from 1 second - 2 minutes.

8. A process according to any one of claims 1-7, wherein the mechanical treatment is carried out at a pressure in the range of from 0.01 - 2 GPa, preferably at a pressure of 0.01 - 1 GPa.

9. A process according to any one of claims 1-8, wherein the protective layer has a thickness in the range of from 1 nanometer to 2 µm, preferably 1 nanometer to 1 µm.

10. A process according to any one of claims 1-9, wherein the mechanical component comprises a bearing component, a gear box component, a shaft or a machine bed.

11. A process according to claim 10, wherein the mechanical component comprises a bearing ring.

12. A process according to any one of claims 1-11, wherein prior to the mechanical treatment the mechanical component has been subjected to one or more finishing techniques selected from the group consisting of grinding and honing, hard turning, ECM (electro chemical machining), calendaring, burnishing, vibrofinishing and laser treatment.

13. A process according to any one of claims 1-12, wherein the mechanical treatment is carried out by means of a honing tool..

14. A process according to claim 13, wherein in the hone-like process use is made of a carrier which is impregnated with the metal phosphate and/or metal sulphate, or which is provided with a layer of the metal phosphate and/or metal sulphate.

## Patentansprüche

1. Verfahren zur Herstellung einer Schutzschicht auf einer tribiologischen Oberfläche eines mechanischen Bauteils, wobei die Schicht ein Metallphosphat und/oder Metallsulfat mit Verschleißschutz- und/oder Fressschutzeigenschaften umfasst und das Verfahren das Unterziehen der Oberfläche des Bauteils einer mechanischen Behandlung umfasst, die mit einem Werkzeug ausgeführt wird, das sich an oder entlang der tribiologischen Oberfläche bewegt, wobei während dieser Behandlung das Metallphosphat und/oder Metallsulfat in fester Form bereitgestellt wird und die Schicht auf der Oberfläche des mechanischen Bauteils mittels physikalischer Abscheidung des Metallphosphats und/oder Metallsulfats gebildet wird.

2. Verfahren nach Anspruch 2, wobei das Metall ausgewählt ist aus der Gruppe bestehend aus Calcium, Zink, Antimon, Blei, Bismut und Barium.

3. Verfahren nach Anspruch 1 oder 2, wobei das Metallphosphat Calciumphosphat ist.

4. Verfahren nach einem der Ansprüche 1 bis 3, wobei das Metallphosphat und/oder Metallsulfat in Form eines Pulvers oder einer Paste bereitgestellt wird.

5. Verfahren nach Anspruch 4, wobei das Metallphosphat und/oder Metallsulfat in Form eines Pulvers bereitgestellt wird.

6. Verfahren nach einem der Ansprüche 1 bis 5, wobei die mechanische Behandlung bei einer Temperatur im Bereich von 20 bis 150 °C, vorzugsweise im Bereich von 40 bis 120 °C ausgeführt wird.

7. Verfahren nach einem der Ansprüche 1 bis 6, wobei die mechanische Behandlung für einen Zeitraum im Bereich von 1 Sekunde bis 10 Minuten, vorzugsweise einem Zeitraum im Bereich von 1 Sekunde bis 2 Minuten ausgeführt wird.

8. Verfahren nach einem der Ansprüche 1 bis 7, wobei die mechanische Behandlung bei einer Druck im Bereich von 0,01 bis 2 GPa, vorzugsweise einem Druck von 0,01 bis 1 GPa ausgeführt wird.

9. Verfahren nach einem der Ansprüche 1 bis 8, wobei die Schutzschicht eine Dicke im Bereich von 1 Nanometer bis 2 µm, vorzugsweise 1 Nanometer bis 1 µm aufweist.

10. Verfahren nach einem der Ansprüche 1 bis 9, wobei das mechanische Bauteil ein Lagerbauteil, ein Getriebebauteil, eine Welle oder ein Maschinenbett umfasst.

11. Verfahren nach Anspruch 10, wobei das mechanische Bauteil einen Lagerring umfasst.

12. Verfahren nach einem der Ansprüche 1 bis 11, wobei das mechanische Bauteil vor der mechanischen Behandlung einer oder mehreren Endbearbeitungstechniken unterzogen wurde, die ausgewählt sind aus der Gruppe bestehend aus Schleifen und Honen, Hartdrehen, ECM (Electro Chemical Machining = elektrochemische Bearbeitung), Kalandrieren, Polieren, Gleitschleifen und Laserbehandlung.

13. Verfahren nach einem der Ansprüche 1 bis 12, wobei die mechanische Behandlung mittels eines Honwerkzeugs ausgeführt wird.

14. Verfahren nach Anspruch 13, wobei in dem honähnlichen Verfahren ein Träger benutzt wird, der mit de Metallphosphat und/oder Metallsulfat imprägniert ist oder der mit einer Schicht des Metallphosphats und/oder Metallsulfats versehen ist.

## Revendications

1. Procédé de préparation d'une couche protectrice sur une surface tribologique d'un composant mécanique, la couche comprenant un phosphate métallique et/ou un sulfate métallique ayant des propriétés antiusure et/ou antifrottement, et le procédé comprenant la soumission de la surface du composant à un traitement mécanique qui est réalisé avec un outil qui se déplace à ou le long de la surface tribologique, traitement pendant lequel le phosphate métallique et/ou le sulfate métallique sous forme solide sont fournis et la couche est formée sur la surface du composant mécanique au moyen d'un dépôt physique du phosphate métallique et/ou du sulfate métallique.

2. Procédé selon la revendication 1, dans lequel le métal est choisi dans le groupe constitué par le calcium, le zinc, l'antimoine, le plomb, le bismuth et le baryum.

3. Procédé selon la revendication 1 ou 2, dans lequel le phosphate métallique est le phosphate de calcium.

4. Procédé selon l'une quelconque des revendications 1 à 3, dans lequel le phosphate métallique et/ou le sulfate métallique sont fournis sous la forme d'une poudre ou d'une pâte.

5. Procédé selon la revendication 4, dans lequel le phosphate métallique et/ou le sulfate métallique sont fournis sous la forme d'une poudre.

6. Procédé selon l'une quelconque des revendications 1 à 5, dans lequel le traitement mécanique est réalisé à une température dans la gamme de 20 - 150 °C, de préférence dans la gamme de 40 - 120 °C.

7. Procédé selon l'une quelconque des revendications 1 à 6, dans lequel le traitement mécanique est réalisé pendant un laps de temps dans la gamme de 1 seconde à 10 minutes, de préférence un laps de temps dans la gamme de 1 seconde - 2 minutes.

8. Procédé selon l'une quelconque des revendications 1 à 7, dans lequel le traitement mécanique est réalisé à une pression dans la gamme de 0,01 - 2 GPa, de préférence à une pression de 0,01 - 1 GPa.

9. Procédé selon l'une quelconque des revendications 1 à 8, dans lequel la couche protectrice a une épaisseur dans la gamme de 1 nanomètre à 2 µm, de préférence 1 nanomètre à 1 µm.

10. Procédé selon l'une quelconque des revendications 1 à 9, dans lequel le composant mécanique comprend un composant de roulement, un composant de boîte d'engrenages, un arbre ou un banc de machine.

11. Procédé selon la revendication 10, dans lequel le composant mécanique comprend une bague de roulement.

12. Procédé selon l'une quelconque des revendications 1 à 11, dans lequel avant le traitement mécanique le composant mécanique a été soumis à une ou plusieurs techniques de finition choisies dans le groupe constitué par le meulage et le rodage, le tournage dur, l'ECM (usinage électrochimique), le calandrage, le brunissage, la vibrofinition et le traitement au laser.

13. Procédé selon l'une quelconque des revendications 1 à 12, dans lequel le traitement mécanique est réalisé au moyen d'un outil de rodage.

14. Procédé selon la revendication 13, dans lequel dans le procédé de type rodage on utilise un support qui est imprégné avec le phosphate métallique et/ou le sulfate métallique, ou qui est pourvu d'une couche du phosphate métallique et/ou du sulfate métallique.
